# EUROPÄISCHE PATENTSCHRIFT

(11) **EP 1 662 178 B1**
(45) Veröffentlichungstag und Bekanntmachung des Hinweises auf die Patenterteilung: **19.08.2009**
(21) Anmeldenummer: 05024641.2
(22) Anmeldetag: 11.11.2005
(51) Int. Cl.: F16H 57/04

(54) **Kühlkreislauf und Verfahren bei Getrieben mit integriertem Retarder und getrenntem Ölhaushalt für Getriebe und Retarder**
Cooling circuit and method for transmissions having an integrated retarder and a separate oil arrangement for transmission and retarder
Circuit de refroidissement et méthode pour transmissions à ralentisseur intégré et arrangement d'huile séparé pour transmission et ralentisseur

(30) Priorität: 26.11.2004 DE 102004057125
(43) Veröffentlichungstag der Anmeldung: 31.05.2006
(73) Patentinhaber: ZF Friedrichshafen AG, 88038 Friedrichshafen (DE)
(72) Erfinder: Buri, Gerhard, 88677 Markdorf (DE); Reisch, Bernhard, 88316 Isny (DE); Grupp, Bernhard, 88250 Weingarten (DE); Sauter, Frank, 88074 Meckenbeuren (DE)

(56) Entgegenhaltungen:
- DE-A1- 2 160 328
- DE-A1- 2 518 103
- DE-A1- 3 430 456
- DE-A1- 19 625 357
- JP-A- 7 096 828

## Beschreibung

Die vorliegende Erfindung betrifft einen Kühlkreislauf bei Getrieben mit integriertem Retarder und getrenntem Ölhaushalt für Getriebe und Retarder, gemäß dem Oberbegriff des Patentanspruchs 1 und ein Verfahren gemäß dem Oberbegriff des Patentanspruchs 5.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit zu reduzieren oder im Gefälle konstant zu halten. Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder mindestens einen sich im Leistungsfluss befindlichen Rotor und mindestens einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Bei in Getrieben integrierten hydrodynamischen Retardern ist das Hochtreiberrad in das Getriebe integriert, so dass die durch dieses Rad erzeugte Verlustleistung und die Konvektion der im Retarder erzeugten Energie unter gewissen Betriebsbedingungen zu einer Erwärmung der Getriebeöltemperatur führen können. Da die Getriebeöltemperatur für die Lebensdauer des Getriebes von besonderer Bedeutung ist, soll die Getriebeöltemperatur einen Grenzwert nicht überschreiten.

Bei einem Getriebe mit integriertem Retarder und gemeinsamen Ölhaushalt für Getriebe und Retarder wird das Öl bei abgeschaltetem Retarder aus dem Getriebe angesaugt und durch den Öl/Kühlmittelwärmetauscher des Retarders geleitet, was zu einer Getriebekühlung führt.

Um dieses Problem bei einem Getriebe mit integriertem Retarder und getrennten Ölhaushalt von Retarder und Getriebe zu lösen, d.h. um die Getriebetemperatur zu begrenzen, ist aus dem Stand der Technik DE 196 25 357 A1 bekannt, eine gesonderte Kühleinrichtung vorzusehen, was in nachteiliger Weise in einer Erhöhung der Herstellungskosten resultiert.

Der vorliegenden Erfindung liegt die Aufgabe zugrunde, einen Kühlkreislauf für ein Getriebe mit integriertem Retarder und getrennten Ölhaushalt von Retarder und Getriebe anzugeben, welcher die Nachteile des Standes der Technik vermeidet. Insbesondere sollen eine effektive Getriebekühlung ohne erhöhten Bauaufwand gewährleistet werden. Des weiteren soll ein Verfahren zum Betreiben des erfindungsgemäßen Kühlkreislaufs angegeben werden.

Diese Aufgabe wird für einen Kühlkreislauf durch die Merkmale des Patentanspruchs 1 gelöst. Ein Verfahren zum Betreiben des erfindungsgemäßen Kühlkreislaufs ist Gegenstand des Patentanspruchs 5. Weitere erfindungsgemäße Ausgestaltungen und Vorteile gehen aus den entsprechenden Unteransprüchen hervor.

Demnach wird ein Kühlkreislauf vorgeschlagen, umfassend einen im Retarder bzw. im Retarderölkreislauf angeordneten Öl/Kühlmittel Wärmetauscher und einen im Getriebe angeordneten Öl/Öl Wärmetauscher, wobei bei abgeschaltetem Retarder das im Öl/Kühlmittel Wärmetauscher des Retarderölkreislaufs heruntergekühlte Öl durch den Öl/Öl Wärmetauscher im Getriebe leitbar ist, so dass Wärmeenergie des Retarders und gegebenenfalls überhöhte Wärmeenergie aus dem Getriebe im Getriebesumpf abgeführt werden kann.

Gemäß der Erfindung kann durch den Kühlkreislauf das Retarderöl in vorteilhafter Weise auch zum schnellen Aufheizen des Getriebes und somit zur Kraftstoffverbrauchsreduzierung in der Warmlaufphase bei sehr kühlen Außentemperaturen und/oder geringen Lastanforderungen verwendet werden.

Des weiteren wird vorgeschlagen, den erfindungsgemäßen Kühlkreislauf vorzugsweise durch eine elektronische Steuereinheit, beispielsweise die Getriebesteuerung; über einen Aktuator zu aktivieren und abzuschalten, wobei dies in vorteilhafter Weise durch einen im Retardersystem vorgesehenen und ein Abschaltventil für den Retarder umfassenden Aktuator erfolgt. Da die Getriebekühlung nur bei ausgeschaltetem Retarder erfolgt, kann somit der Aktuator für zwei voneinander unabhängige Funktionen, nämlich zur Abschaltung des Retarders und zur Aktivierung des Kühlkreislaufes zur Getriebekühlung bzw. Getriebeaufheizung verwendet werden.

Der Kühlkreislauf kann in Abhängigkeit von Getriebeöltemperatur, Retarderöltemperatur, Kühlmitteltemperatur und/oder auch Umgebungstemperatur zu- bzw. abgeschaltet werden, um eine effektive Kühlung oder Getriebeaufheizung zu realisieren.

Beispielsweise wird der Kühlkreislauf zur Aufheizung des Getriebes aktiviert bzw. zugeschaltet, wenn die Retarderöltemperatur höher ist als die Getriebeöltemperatur und die Getriebeöltemperatur die Betriebstemperatur noch nicht erreicht hat, so dass das Getriebe aufgeheizt werden kann. In diesem Fall kann auch vorgesehen sein, dass der Kühlkreislauf dann aktiviert wird, wenn zusätzlich die Umgebungstemperatur einen vorgegebenen Wert unterschreitet und/oder wenn die Kühlmitteltemperatur einen vorgegebenen Wert nicht unterschreitet. Der Kühlkreislauf wird abgeschaltet, wenn die Getriebeöltemperatur einen vorgegebenen Wert erreicht hat.

Der Kühlkreislauf wird zur Retarderkühlung gemäß einer Variante des erfindungsgemäßen Verfahrens aktiviert bzw. zugeschaltet, wenn die Retarderöltemperatur einen vorgegebenen Wert überschreitet und die Kühlmitteltemperatur unter einem vorgegebenen Grenzwert liegt. Dadurch wird vermieden, dass das Retarderöl ohne Kühlung durch den Öl/Kühlmittel Wärmetauscher den im Getriebe angeordneten ÖI/ÖI Wärmetauscher durchströmt, wodurch sich die Getriebetemperatur stark erhöhen würde. Hierbei kann auch die Getriebeöltemperatur und/oder die Umgebungstemperatur berücksichtigt werden, so dass der Kühlkreislauf dann aktiviert wird, wenn die Getriebeöltemperatur zusätzlich einen ersten vorgegebenen Wert unterschreitet und/oder wenn die Umgebungstemperatur einen vorgegebenen Wert unterschreitet. Der Kühlkreislauf wird abgeschaltet, wenn die Retarderöltemperatur einen vorgegebenen Wert erreicht hat oder wenn die Getriebeöltemperatur einen zweiten vorgegebenen Wert erreicht hat.

Die Erfindung wird im Folgenden anhand der beigefügten Figuren beispielhaft näher erläutert.
Es zeigen:
- Fig. 1: eine schematische Darstellung des erfindungsgemäßen Kühlkreislaufs und
- Fig. 2: eine schematische Darstellung einer vorteilhaften Weiterbildung des erfindungsgemäßen Kühlkreislaufs.

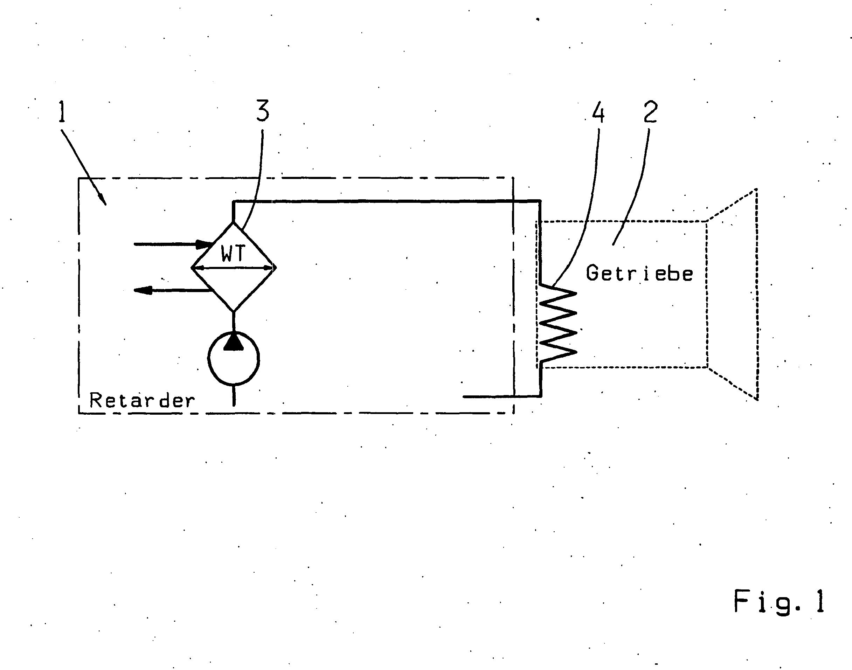

Gemäß Fig. 1 umfasst der erfindungsgemäße Kühlkreislauf einen im Retarder 1 bzw. im Retarderölkreislauf 7 angeordneten Öl/Kühlmittel-Wärmetauscher 3 und einen im Getriebe 2 angeordneten Öl/Öl-Wärmetauscher 4. Bei abgeschaltetem Retarder 1 wird das im Öl/Kühlmittel-Wärmetauscher 3 heruntergekühlte Öl durch den Öl/Öl-Wärmetauscher 4 im Getriebe geleitet, um auf diese Weise die restliche Wärmeenergie des Retarders im Getriebesumpf abzuführen.

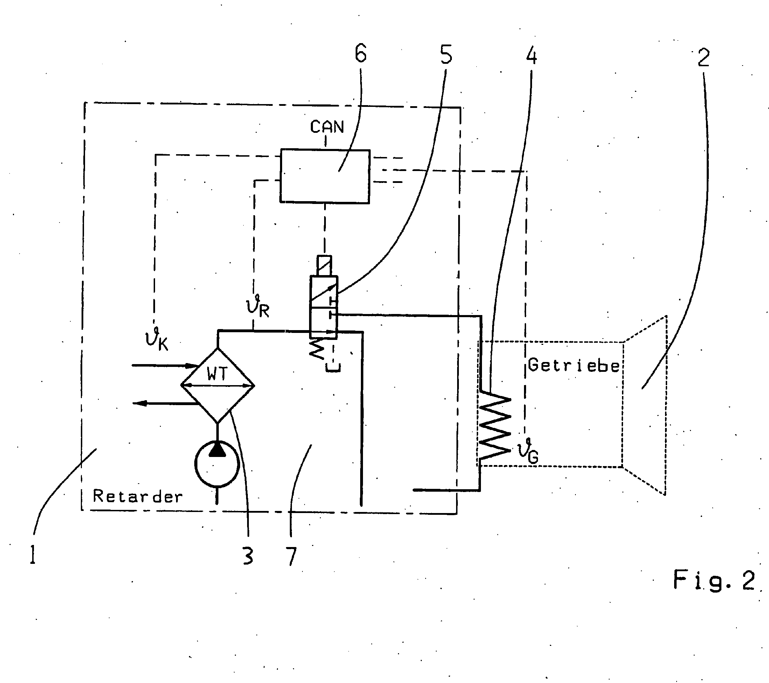

In Fig. 2 ist ein Kühlkreislauf gezeigt, bei dem ebenfalls das im Öl/Kühlmittel-Wärmetauscher 3 heruntergekühlte Öl durch den Öl/Öl-Wärmetauscher 4 im Getriebe 2 leitbar ist. Zusätzlich ist ein Aktuator 5 zum Zu- bzw. Abschalten des Kühlkreislaufes, d.h. zum Zu- bzw. Abschalten der Verbindung zwischen dem Retarderölkreislauf 7 und dem Öl/Öl-Wärmetauscher 4, vorgesehen, der vorzugsweise das Abschaltventil des Retarders 1 enthält. Durch Betätigung des Aktuators 5 kann das sich im Retarderölkreislauf 7 befindliche Retarderöl dem im Getriebe 2 angeordneten Öl/OI-Wärmetauscher 4 zur Kühlung des Retarders 1 oder zur Getriebeaufheizung zugeführt werden.

Der Kühlkreislauf kann, wie bereits erläutert, in Abhängigkeit von der Getriebeöltemperatur ϑ_G, der Retarderöltemperatur ϑ_R, der Kühlmitteltemperatur ϑ_K und/oder auch der Umgebungstemperatur zu- bzw. abgeschaltet werden, um eine effektive Kühlung und/oder Getriebeaufheizung zu real isieren. Diese Daten werden von Sensoren erfasst und über den CAN-Bus an eine elektronische Steuereinheit, beispielsweise an die Getriebesteuerung, geleitet, welche den Aktuator 5 ansteuert.

Durch die erfindungsgemäße Konzeption wird ein Kühlkreislauf für ein Getriebe mit integriertem Retarder und getrenntem Ölhaushalt von Retarder und Getriebe zur Verfügung gestellt, welcher eine unzulässige Getriebeerwärmung vermeidet. Des weiteren wird durch die Möglichkeit, das Getriebe auf Betriebstemperatur aufzuheizen, dieses zusätzlich geschont.

### Bezugszeichen

- 1: Retarder
- 2: Getriebe
- 3: Öl/Kühlmittel-Wärmetauscher
- 4: ÖI/ÖI-Wärmetauscher
- 5: Aktuator, Abschaltventil
- 6: Getriebesteuerung
- 7: Retarderölkreislauf

## Patentansprüche

1. Kühlkreislauf für ein Getriebe (2) mit integriertem Retarder (1) und getrenntem Ölhaushalt von Retarder (1) und Getriebe (2) und mit einem im Retarder (1) bzw. im Retarderölkreislauf (7) angeordneten Öl/Kühlmittel-Wärmetauscher (3), **dadurch gekennzeichnet, dass** er einen im Getriebe (2) angeordneten Öl/Öl-Wärmetauscher (4) umfasst, derart, dass bei abgeschaltetem Retarder (1) das im Öl/Kühlmittel-Wärmetauscher (3) heruntergekühlte Retarderöl durch den Öl/Öl-Wärmetauscher (4) im Getriebe (2) leitbar ist, um die Wärmeenergie aus dem Getriebesumpf abzuführen.

2. Kühlkreislauf für ein Getriebe (2) mit integriertem Retarder (1) und getrenntem Ölhaushalt von Retarder (1) und Getriebe (2) nach Anspruch 1, **dadurch gekennzeichnet, dass** er einen Aktuator (5) zum Zu- bzw. Abschalten des Kühlkreislaufes bzw. zum Zu- bzw. Abschalten der Verbindung zwischen dem Retarderölkreislauf (7) und dem Öl/Öl-Wärmetauscher (4) umfasst.

3. Kühlkreislauf für ein Getriebe (2) mit integriertem Retarder (1) und getrenntem Ölhaushalt von Retarder (1) und Getriebe (2) nach Anspruch 2, **dadurch gekennzeichnet, dass** der Aktuator (5) das Abschaltventil des Retarders (1) enthält.

4. Kühlkreislauf für ein Getriebe (2) mit integriertem Retarder (1) und getrenntem Ölhaushalt von Retarder (1) und Getriebe (2) nach Anspruch 2 oder 3, **dadurch gekennzeichnet, dass** der Aktuator (5) durch eine elektronische Steuerung (6) ansteuerbar ist.

5. Verfahren zum Betreiben des Kühlkreislaufs für ein Getriebe (2) mit integriertem Retarder (1) und getrenntem Ölhaushalt von Retarder (1) und Getriebe (2) nach einem der Ansprüche 1 bis 4, **dadurch gekennzeichnet, dass** der Kühlkreislauf bei abgeschaltetem Retarder (1) zum Kühlen des Retarders (1) und/oder zum Aufheizen des Getriebes (2) zugeschaltet wird, wenn die Getriebetemperatur unterhalb der Betriebstemperatur liegt.

6. Verfahren zum Betreiben des Kühlkreislaufs für ein Getriebe (2) mit integriertem Retarder (1) und getrenntem Ölhaushalt von Retarder (1) und Getriebe (2) nach Anspruch 5, **dadurch gekennzeichnet, dass** der Kühlkreislauf in Abhängigkeit von der Getriebeöltemperatur (ϑ_G), der Retarderöltemperatur (ϑ_R), der Kühlmitteltemperatur (ϑ_K) und/oder der Umgebungstemperatur zu- bzw. abgeschaltet wird, um eine effektive Kühlung oder Getriebeaufheizung zu realisieren, ohne die Getriebetemperatur unzulässig zu erhöhen.

7. Verfahren zum Betreiben des Kühlkreislaufs für ein Getriebe (2) mit integriertem Retarder (1) und getrenntem Ölhaushalt von Retarder (1) und Getriebe (2) nach Anspruch 6, **dadurch gekennzeichnet, dass** der Kühlkreislauf zur Aufheizung des Getriebes zugeschaltet wird, wenn die Retarderöltemperatur (ϑ_R) höher ist als die Getriebeöltemperatur (ϑ_G) und die Getriebeöltemperatur (ϑ_G) die Betriebstemperatur noch nicht erreicht hat, wobei der Kühlkreislauf abgeschaltet wird, wenn die Getriebeöltemperatur (ϑ_G) einen vorgegebenen Wert erreicht hat.

8. Verfahren zum Betreiben des Kühlkreislaufs für ein Getriebe (2) mit integriertem Retarder (1) und getrenntem Ölhaushalt von Retarder (1) und Getriebe (2) nach Anspruch 7, **dadurch gekennzeichnet, dass** der Kühlkreislauf zur Aufheizung des Getriebes (2) zugeschaltet wird, wenn zusätzlich die Umgebungstemperatur einen vorgegebenen Wert unterschreitet und/ oder wenn die Kühlmitteltemperatur (ϑ_K) einen vorgegebenen Wert nicht unterschreitet.

9. Verfahren zum Betreiben des Kühlkreislaufs für ein Getriebe (2) mit integriertem Retarder (1) und getrenntem Ölhaushalt von Retarder (1) und Getriebe (2) nach Anspruch 5, 6, 7 oder 8, **dadurch gekennzeichnet, dass** der Kühlkreislauf zugeschaltet wird, wenn die Retarderöltemperatur (ϑ_R) einen vorgegebenen Wert überschreitet und die Kühlmitteltemperatur (ϑ_K) unter einem vorgegebenen Grenzwert liegt, wobei der Kühlkreislauf abgeschaltet wird, wenn die Retarderöltemperatur (ϑ_R) oder die Getriebeöltemperatur (ϑ_G) einen vorgegebenen Wert erreicht hat.

10. Verfahren zum Betreiben des Kühlkreislaufs für ein Getriebe (2) mit integriertem Retarder (1) und getrenntem Ölhaushalt von Retarder (1) und Getriebe (2) nach Anspruch 9, **dadurch gekennzeichnet, dass** der Kühlkreislauf zugeschaltet wird, wenn zusätzlich die Getriebeöltemperatur (ϑ_G) einen weiteren vorgegebenen Wert unterschreitet und/oder wenn die Umgebungstemperatur einen vorgegebenen Wert unterschreitet.

## Claims

1. Cooling circuit for a transmission (2) with integrated retarder (1) and with separate oil management of the retarder (1) and transmission (2), and with an oil/coolant heat exchanger (3) arranged in the retarder (1) or in the retarder oil circuit (7), **characterized in that** it comprises an oil/oil heat exchanger (4) arranged in the transmission (2), in such a way that, with the retarder (1) switched off, the retarder oil cooled down in the oil/coolant heat exchanger (3) can be conducted through the oil/oil heat exchanger (4) in the transmission (2), in order to discharge the heat energy out of the transmission sump.

2. Cooling circuit for a transmission (2) with integrated retarder (1) and with separate oil management of the retarder (1) and transmission (2) according to Claim 1, **characterized in that** it comprises an actuator (5) for switching on and off the cooling circuit or for switching on and off the connection between the retarder oil circuit (7) and the oil/oil heat exchanger (4).

3. Cooling circuit for a transmission (2) with integrated retarder (1) and with separate oil management of the retarder (1) and transmission (2) according to Claim 2, **characterized in that** the actuator (5) contains the switch-off valve of the retarder (1).

4. Cooling circuit for a transmission (2) with integrated retarder (1) and with separate oil management of the retarder (1) and transmission (2) according to Claim 2 or 3, **characterized in that** the actuator (5) can be activated by means of an electronic control (6).

5. Method for operating the cooling circuit for a transmission (2) with integrated retarder (1) and with separate oil management of the retarder (1) and transmission (2) according to one of Claims 1 to 4, **characterized in that**, with the retarder (1) switched off, the cooling circuit is switched on for cooling the retarder (1) and/or for heating the transmission (2) when the transmission temperature lies below the operating temperature.

6. Method for operating the cooling circuit for a transmission (2) with integrated retarder (1) and with separate oil management of the retarder (1) and transmission (2) according to Claim 5, **characterized in that** the cooling circuit is switched on and off as a function of the transmission-oil temperature (ϑ_G), of the retarder-oil temperature (ϑ_R), of the coolant temperature (ϑ_K) and/or of the ambient temperature, in order to carry out an effective cooling or transmission heating, without inadmissibly increasing the transmission temperature.

7. Method for operating the cooling circuit for a transmission (2) with integrated retarder (1) and with separate oil management of the retarder (1) and transmission (2) according to Claim 6, **characterized in that** the cooling circuit is switched on for heating the transmission when the retarder-oil temperature (ϑ_R) is higher than the transmission-oil temperature (ϑ_G) and the transmission-oil temperature (ϑ_G) has not yet reached the operating temperature, the cooling circuit being switched off when the transmission-oil temperature (ϑ_G) has reached a predetermined value.

8. Method for operating the cooling circuit for a transmission (2) with integrated retarder (1) and with separate oil management of the retarder (1) and transmission (2) according to Claim 7, **characterized in that** the cooling circuit is switched on for heating the transmission (2) when additionally the ambient temperature undershoots a predetermined value and/or when the coolant temperature (ϑ_K) does not undershoot a predetermined value.

9. Method for operating the cooling circuit for a transmission (2) with integrated retarder (1) and with separate oil management of the retarder (1) and transmission (2) according to Claim 5, 6, 7 or 8, **characterized in that** the cooling circuit is switched on when the retarder-oil temperature (ϑ_R) overshoots a predetermined value and the coolant temperature (ϑ_K) lies below a predetermined limit value, the cooling circuit being switched off when the retarder-oil temperature (ϑ_R) or the transmission-oil temperature (ϑ_G) has reached a predetermined value.

10. Method for operating the cooling circuit for a transmission (2) with integrated retarder (1) and with separate oil management of the retarder (1) and transmission (2) according to Claim 9, **characterized in that** the cooling circuit is switched on when additionally the transmission-oil temperature (ϑ_G) undershoots a further predetermined value and/or when the ambient temperature undershoots a predetermined value.

## Revendications

1. Circuit de refroidissement pour une transmission (2) avec un ralentisseur intégré (1) et un réservoir d'huile séparé du ralentisseur (1) et de la transmission (2), et avec un échangeur de chaleur huile/réfrigérant (3) disposé dans le ralentisseur (1) ou dans le circuit d'huile du ralentisseur (7), **caractérisé en ce qu'**il comprend un échangeur de chaleur huile/huile (4) disposé dans la transmission (2), de telle sorte que lorsque le ralentisseur (1) est déconnecté, l'huile du ralentisseur refroidie dans l'échangeur de chaleur huile/réfrigérant (3) puisse être conduite à travers l'échangeur de chaleur huile/huile (4) dans la transmission (2), afin d'évacuer l'énergie thermique hors du carter de la transmission.

2. Circuit de refroidissement pour une transmission (2) avec un ralentisseur intégré (1) et un réservoir d'huile séparé du ralentisseur (1) et de la transmission (2) selon la revendication 1, **caractérisé en ce qu'**il comprend un actionneur (5) pour brancher ou couper le circuit de refroidissement ou pour brancher ou couper la connexion entre le circuit d'huile du ralentisseur (7) et l'échangeur de chaleur huile/huile (4).

3. Circuit de refroidissement pour une transmission (2) avec un ralentisseur intégré (1) et un réservoir d'huile séparé du ralentisseur (1) et de la transmission (2) selon la revendication 2, **caractérisé en ce que** l'actionneur (5) contient la soupape de coupure du ralentisseur (1).

4. Circuit de refroidissement pour une transmission (2) avec un ralentisseur intégré (1) et un réservoir d'huile séparé du ralentisseur (1) et de la transmission (2) selon la revendication 2 ou 3, **caractérisé en ce que** l'actionneur (4) peut être commandé par une commande électronique (6).

5. Procédé pour faire fonctionner le circuit de refroidissement pour une transmission (2) avec un ralentisseur intégré (1) et un réservoir d'huile séparé du ralentisseur (1) et de la transmission (2) selon l'une quelconque des revendications 1 à 4, **caractérisé en ce que** le circuit de refroidissement, lorsque le ralentisseur (1) est coupé, est commuté pour refroidir le ralentisseur (1) et/ou pour chauffer la transmission (2), quand la température de la transmission est en dessous de la température de fonctionnement.

6. Procédé pour faire fonctionner le circuit de refroidissement pour une transmission (2) avec un ralentisseur intégré (1) et un réservoir d'huile séparé du ralentisseur (1) et de la transmission (2) selon la revendication 5, **caractérisé en ce que** le circuit de refroidissement est branché ou coupé en fonction de la température de l'huile de la transmission (θ_G), de la température de l'huile du ralentisseur (θ_R), de la température du réfrigérant (θ_K) et/ou de la température de l'environnement, afin de réaliser un refroidissement efficace ou un chauffage de la transmission efficace sans augmenter de manière inadmissible la température de la transmission.

7. Procédé pour faire fonctionner le circuit de refroidissement pour une transmission (2) avec un ralentisseur intégré (1) et un réservoir d'huile séparé du ralentisseur (1) et de la transmission (2) selon la revendication 6, **caractérisé en ce que** le circuit de refroidissement est branché pour chauffer la transmission lorsque la température de l'huile du ralentisseur (θ_R) est supérieure à la température de l'huile de la transmission (θ_G) et que la température de l'huile de la transmission (θ_G) n'a pas encore atteint la température de fonctionnement, le circuit de refroidissement étant coupé quand la température de l'huile de la transmission (θ_G) a atteint une valeur prédéterminée.

8. Procédé pour faire fonctionner le circuit de refroidissement pour une transmission (2) avec un ralentisseur intégré (1) et un réservoir d'huile séparé du ralentisseur (1) et de la transmission (2) selon la revendication 7, **caractérisé en ce que** le circuit de refroidissement est branché pour chauffer la transmission (2), lorsque la température de l'environnement est en outre en dessous d'une valeur prédéfinie et/ou lorsque la température du réfrigérant (θ_K) n'est pas en dessous d'une valeur prédéfinie.

9. Procédé pour faire fonctionner le circuit de refroidissement pour une transmission (2) avec un ralentisseur intégré (1) et un réservoir d'huile séparé du ralentisseur (1) et de la transmission (2) selon la revendication 5, 6, 7 ou 8, **caractérisé en ce que** le circuit de refroidissement est branché lorsque la température de l'huile du ralentisseur (θ_R) dépasse une valeur prédéfinie et que la température du réfrigérant (θ_K) se trouve en dessous d'une valeur limite prédéfinie, le circuit de refroidissement étant coupé lorsque la température de l'huile du ralentisseur (θ_R) ou que la température de l'huile de la transmission (θ_G) a atteint une valeur prédéfinie.

10. Procédé pour faire fonctionner le circuit de refroidissement pour une transmission (2) avec un ralentisseur intégré (1) et un réservoir d'huile séparé du ralentisseur (1) et de la transmission (2) selon la revendication 9, **caractérisé en ce que** le circuit de refroidissement est branché lorsque, en outre, la température de l'huile de la transmission (θ_G) est inférieure à une autre valeur prédéfinie et/ou lorsque la température de l'environnement est en dessous d'une valeur prédéfinie.
